Europäisches Patentamt

European Patent Office

Office européen des brevets

(19)

(11) Veröffentlichungsnummer: **0 036 565**
**A1**

(12) **EUROPÄISCHE PATENTANMELDUNG**

(21) Anmeldenummer: **81101791.2**

(22) Anmeldetag: **11.03.81**

(51) Int. Cl.³: **F 24 D 3/00,** F 28 D 21/00,
F 23 L 11/00, F 23 L 11/02,
F 24 D 11/00

(30) Priorität: **21.03.80 DE 3010847**

(43) Veröffentlichungstag der Anmeldung: **30.09.81**
**Patentblatt 81/39**

(84) Benannte Vertragsstaaten: **AT BE CH DE FR GB IT LI LU NL SE**

(71) Anmelder: **Fröling GmbH & Co. Kessel-Apparatebau, Hoffnungsthaler Strasse, D-5063 Overath (DE)**

(72) Erfinder: **Kremer, Robert, Maashofstrasse 22, D-5090 Leverkusen 3 (DE)**

(74) Vertreter: **Lippert, Hans-Joachim, Dipl.-Ing. et al, Dipl.-Ing. W. Dahlke Dipl.-Ing. H.-J. Lippert Patentanwälte Frankenforster Strasse 137, D-5060 Bergisch Gladbach 3 (DE)**

(54) **Wärmerückgewinnungseinrichtung für Heizkessel.**

(57) Bei einer Wärmerückgewinnungseinrichtung (1) für Heizkessel, insbesondere für Heizkessel mit Gebläsebrenner, wird der Abgasstrom durch einen Wärmeaustauscher geführt, durch den gleichzeitig ein aufzuheizendes Medium geleitet wird.

Um zu verhindern, daß Stillstandsverluste auftreten und insbesondere keine Auskühlung des Kessels über den Kamin stattfinden kann, besteht der Wärmeaustauscher aus einem in die Abgasleitung schaltbaren, rundum geschlossenen topfartigen Gefäss (2), einem in den oberen Bereich des Gefäßes (2) mündenden Abgaseinlaß (4), mindestens einem in einem Abstand von diesem aus dem oberen Bereich des Gefäßes (2) herausgeführten Abgasauslaß (6), einer in dem Gefäß (2) angeordneten, im wesentlichen vertikalen Trennwand (7), die sich vom Deckel (8) des Gefäßes (2) nach unten erstreckt, in einem Abstand vom Gefäßboden (9) endet und den direkten Abgasweg vom Einlaß (4) zum Auslaß (6) derart unterbricht, daß ein siphonartiger Abgasweg mit einer Einlaßkammer (10) und einer Auslaßkammer (11) entsteht, sowie einer in der Gefäßaußenwand im Bereich der Auslaßkammer (11) angeordneten Zugunterbrecherklappe (15).

"Wärmerückgewinnungseinrichtung für Heizkessel"

Die Erfindung betrifft eine Wärmerückgewinnungseinrichtung für Heizkessel, insbesondere für Heizkessel mit Gebläsebrenner, mit einem im Abgasstrom angeordneten Wärmeaustauscher, durch den ein aufzuheizendes Medium geleitet wird.

Bei einer bekannten Wärmerückgewinnungseinrichtung der genannten Art, bei der die Wärmeaustauscherflächen im direkten Abgasweg vom Kessel zum Kamin angeordnet sind, kühlen der Heizkessel sowie der Wärmeaustauscher während der Stillstandszeiten der Feuerung stark aus. Der angestrebte Effekt der Wärmerückgewinnung wird dabei durch die großen Kaminaustrittsverluste zum Teil wieder aufgehoben. Die Kaminauskühlverluste fallen bei den üblichen Anlagen stark ins Gewicht, bei denen der Betriebsstundenzahl der Feuerung von maximal 2000 Stunden pro Jahr eine Stillstandsbereitschaftszeit von ca. 6000 Stunden pro Jahr gegenübersteht.

Als Gegenmaßnahme gegen zu hohe Kaminauskühlverluste im Stillstand ist der Einbau von motorgetriebenen Klappen im Abgasweg bekannt. Derartige Abgasklappen sind aber verhältnismäßig aufwendig und teuer, so daß sie häufig unrentabel sind, da der Aufwand in keinem Verhältnis zu der erzielten Wärmeersparnis steht.

Der Erfindung liegt daher die Aufgabe zugrunde, eine Wärmerückgewinnungseinrichtung zu schaffen, die Stillstandsverlusten, insbesondere einer Auskühlung des Kessels über dem Kamin, mit einfachen Mitteln entgegenwirkt.

Erfindungsgemäß wird diese Aufgabe gelöst durch eine Wärmerückgewinnungseinrichtung, die gekennzeichnet ist durch ein in die Abgasleitung schaltbares, rundum geschlossenes topfartiges Gefäß, einen in den oberen Bereich des Gefäßes mündenden Abgaseinlaß, einen in einem Abstand von diesem aus dem oberen Bereich des Gefäßes herausgeführten Abgasauslaß, einer in dem Gefäß angeordneten, im wesentlichen vertikalen Trennwand, die sich vom Deckel des Gefäßes nach unten erstreckt, in einem Abstand von dem Gefäßboden endet und den direkten Abgasweg vom Einlaß zum Auslaß derart unterbricht, daß ein siphonartiger Abgasweg mit einer Einlaßkammer und einer Auslaßkammer entsteht, sowie einer in der Gefäßaußenwand im Bereich der Auslaßkammer angeordneten Zugunterbrecherklappe.

Durch die siphonartige Ausbildung des topfartigen Wärmerückgewinnungsgefäßes entsteht bei Brennerstillstand eine thermische Sperre, die ein Auskühlen des Kessels verhindert. Die thermische Sperre kann selbst bei starkem Kaminzug dadurch aufrechterhalten werden, daß im Bereich der Auslaßkammer Frischluft durch die Zugunterbrecherklappe angesaugt wird. Dadurch ist gleichzeitig sichergestellt, daß der Kamin stets belüftet ist. Durch den beim Zünden des Brenners entstehenden Druckstoß wird die Zugunterbrecherklappe geschlossen, so daß keine Abgase in den Heizraum gelangen können.

Vorzugsweise ist der Wärmeaustauscher in der Einlaßkammer des Wärmerückgewinnungsgefäßes angeordnet. Dadurch wird erreicht, daß auch der Wärmeaustauscher von der thermischen Sperre profitiert und während der Brennerstillstandszeiten weitgehend gegen Auskühlung geschützt ist.

Der Wärmeaustauscher kann aus haarnadelartig gebogenen Rohren bestehen, die sich von einem Sammelkammersystem nach unten in die Einlaßkammer des topfartigen Gefäßes·erstrecken. Die Rohre werden dabei während des Brennerbetriebs von den abwärts strömenden Abgasen umspült.

Im tiefsten Punkt des Bodens des topfartigen Gefäßes ist zweckmäßig eine Öffnung zum Auslaß von eventuell entstehender Kondensflüssigkeit vorgesehen.

Der Abgasauslaß kann auf der dem Abgaseinlaß gegenüberliegenden Seite des topfartigen Gefäßes angeordnet sein. Bei dieser Konstruktion kann die Zugunterbrecherklappe unterhalb des Abgasauslasses angebracht sein.

Bei einer bevorzugten Ausführungsform ist die den Siphon bildende vertikale Trennwand bogenartig oder in anderer Weise gewölbt ausgebildet, wobei die konkave Seite der Trennwand zur Einlaßkammer gerichtet ist. Bei dieser Ausführungsform weist das topfartige Gefäß im Bereich der Auslaßkammer vorzugsweise drei in Höhe der Einlaßöffnung angeordnete Auslaßöffnungen auf, die wahlweise verschließbar sind. Wahlweise können in den Auslaßöffnungen auch Zugunterbrecherklappen installierbar sein.

Die Zugunterbrecherklappe ist zweckmäßig um eine im wesentlichen horizontale Achse schwenkbar und steht aufgrund eines einstellbaren Gegengewichtes bei Stillstand des Brenners in geöffneter und bei Betrieb des Brenners in geschlossener Stellung.

Die Erfindung ist in der Zeichnung beispielsweise veranschaulicht und im nachstehenden im einzelnen anhand der Zeichnung beschrieben. Es zeigen:

Fig. 1 einen vertikalen Schnitt durch eine Ausführungsform einer Wärmerückgewinnungseinrichtung,

Fig. 2 einen Schnitt entlang der Linie II-II aus Fig. 1,

Fig. 3 einen vertikalen Schnitt durch ein anderes Ausführungsbeispiel der Wärmerückgewinnungseinrichtung und

Fig. 4 einen Schnitt entlang der Linie IV-IV aus Fig. 3.

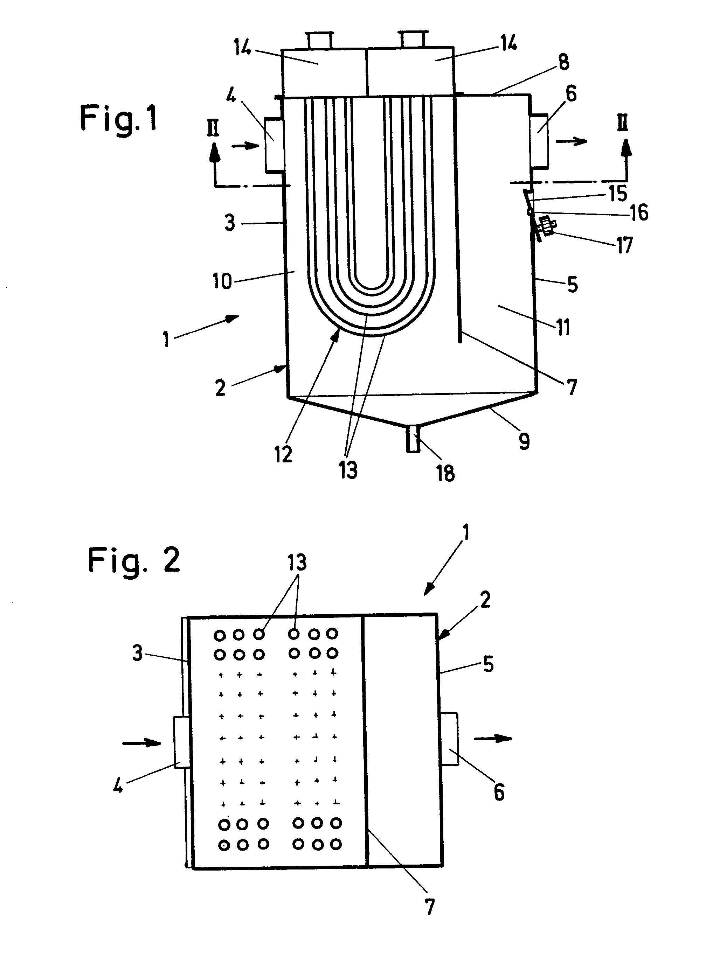

Nach Fig. 1 und 2 besteht die Wärmerückgewinnungseinrichtung 1 aus einem rundum geschlossenen topfartigen Gefäß 2, das einen im wesentlichen quadratischen Querschnitt aufweist. In dem oberen Bereich einer Seitenwand 3 des topfartigen Gefäßes 2 ist eine Abgaseinlaßöffnung 4 vorgesehen. Im oberen Bereich der gegenüberliegenden Seitenwand 5 befindet sich eine Abgasauslaßöffnung 6.

Im Inneren des topfartigen Gefäßes 2 befindet sich eine vertikale Trennwand 7, die sich vom Deckel 8 des topfartigen Gefäßes 2 über die gesamte Breite des Gefäßes nach unten erstreckt und in einem Abstand vom Gefäßboden 9 endet. Durch die Trennwand 7 ist der direkte Abgasweg von der mit dem Heizkessel verbundenen Abgaseinlaßöffnung 4 zu der mit dem Kamin verbundenen Abgasauslaßöffnung 6 unterbrochen. Gleichzeitig wird der Innenraum des Gefäßes 2 durch die Trennwand 7 in eine Abgaseinlaßkammer 10 und eine Abgasauslaßkammer 11 unterteilt, wobei ein siphonartiger Abgasweg von der Einlaßöffnung 4 durch die Einlaßkammer 10, unter der Trennwand 7 hindurch in die Auslaßkammer 11 zur Auslaßöffnung 6 entsteht.

Die Abgaseinlaßkammer 10 ist größer als die Auslaßkammer 11 ausgebildet und dient gleichzeitig zur Aufnahme eines Wärmeaustauschers 12. Dieser besteht aus einer Mehrzahl von haarnadelartig gebogenen Rohren 13, die sich von einem auf der Oberseite des Gefäßes 2 angeordneten Sammelkammersystem 14 nach unten in die Abgaseinlaßkammer 10 erstrecken und von den nach unten strömenden heißen Abgasen umspült werden.

Unterhalb der Abgasauslaßöffnung 6 ist in der Gefäßaußenwand eine mit einer Zugunterbrecherklappe 15 versehene Öffnung angeordnet, durch die während der Brennerstillstandszeiten Frischluft angesaugt werden kann. Die Zugunterbrecherklappe 15 ist um eine horizontale Achse 16 schwenkbar und mit einem einstellbaren Gegengewicht 17 versehen. Das Gegengewicht 17 läßt sich so einstellen, daß die Klappe 15 bei Stillstand des Brenners in geöffneter und bei Betrieb des Brenners in geschlossener Stellung steht. Bei Druckanstieg im Gefäß 2, insbesondere während der Zündungsphase des Brenners, kann sich die Klappe 15 selbsttätig schließen, so daß keine Abgase in den Heizraum gelangen können.

Der Boden 9 des Gefäßes 2 ist zu seiner Mitte hin leicht nach unten geneigt und in seinem tiefsten Punkt mit einer Auslaßöffnung 18 versehen, so daß eventuell entstehende Kondensflüssigkeiten abfließen können.

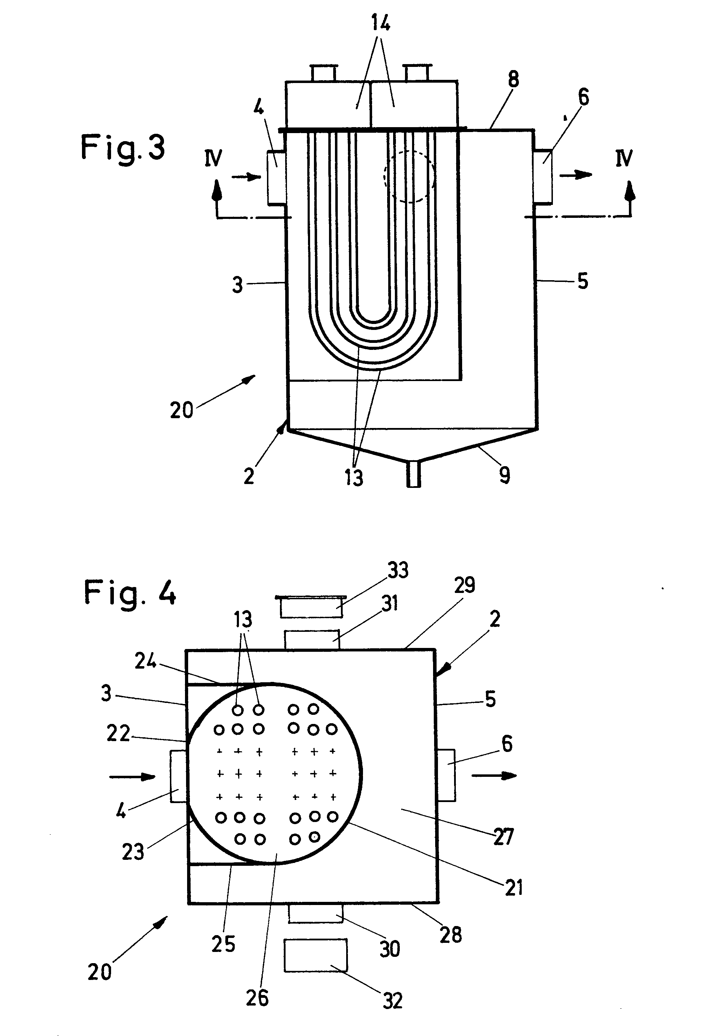

In Fig. 3 und 4 ist ein weiteres Ausführungsbeispiel einer Wärmerückgewinnungseinrichtung 20 dargestellt. In der folgenden Beschreibung der Einrichtung sind diejenigen Teile, die mit denen des in Fig. 1 und 2 dargestellten Ausführungsbeispiels übereinstimmen, mit den gleichen Positionszahlen versehen worden.

Auch bei diesem Ausführungsbeispiel ist ein rundum geschlossenes topfartiges Gefäß 2 vorgesehen, das einen im wesentlichen quadratischen Querschnitt hat und im oberen Bereich der einen Seitenwand 3 mit einem Abgaseinlaß 4 und im oberen Bereich der gegenüberliegenden Seitenwand 5 mit einem Abgasauslaß 6 versehen ist.

Die sich vom Deckel 8 nach unten erstreckende Trennwand 21 verläuft im vorliegenden Fall jedoch nicht parallel zu den Seitenwänden 3 und 5 des Gefäßes 2, sondern ist bogenartig um die Abgaseinlaßöffnung 4 herum gewölbt ausgebildet. Die seitlichen Enden 22 und 23 der bogenförmigen Trennwand 21 sind an die Seitenwand 3 angeschweißt. Als zusätzliche Halterung dienen noch zwei Stützbleche 24 und 25, die einerseits mit der bogenförmigen Trennwand und andererseits mit der Seitenwand 3 des Gefäßes 2 verschweißt sind.

Bei diesem Ausführungsbeispiel bildet die konkave Seite der Trennwand 21 zusammen mit der Seitenwand 3 des Gefäßes 2 die Einlaßkammer 26, in der die haarnadelartig gebogenen Wärmeaustauscherrohre 13 untergebracht sind, wobei diese ebenso wie bei dem vorangehend beschriebenen Ausführungsbeispiel von einem auf dem Gefäß angeordneten Sammelkammersystem 14 ausgehen.

Die Auslaßkammer 27 erstreckt sich aufgrund der Wölbung der Trennwand auch über die gesamte Länge der beiden anderen Seitenwände 28 und 29. In diesen beiden Seitenwänden 28 und 29 sind in gleicher Höhe mit den Ein- und Auslaßöffnungen 4 und 6 zwei weitere mittig angeordnete Auslaßöffnungen 30 und 31 angeordnet. Aufgrund dieser Konstruktion sind die Einbaumöglichkeiten des Gefäßes 2 sehr vielseitig. Als Abgasauslaß kann jeweils diejenige Auslaßöffnung verwendet werden, die am günstigsten zum Kamin liegt. Wenn, wie in der Zeichnung dargestellt, die Auslaßöffnung 6 an den Kamin angeschlossen werden soll, so kann in die Auslaßöffnung 30 eine Zugunterbrecherklappe 32 eingebaut werden, während die andere Auslaßöffnung 31 mit einem Deckel 33 verschlossen wird. Ebenso ist es jedoch auch möglich, die Zugunterbrecherklappe 32 auf die Auslaßöffnung 31 zu setzen oder auf beiden Seiten Zugunterbrecherklappen vorzusehen.

Ansprüche

1. Wärmerückgewinnungseinrichtung (1) für Heizkessel, insbesondere für Heizkessel mit Gebläsebrenner, mit einem im Abgasstrom angeordneten Wärmeaustauscher, durch den ein aufzuheizendes Medium geleitet wird, g e k e n n z e i c h n e t   d u r c h ein in die Abgasleitung schaltbares, rundum geschlossenes topfartiges Gefäß (2), einem in den oberen Bereich des Gefäßes (2) mündenden Abgaseinlaß (4), mindestens einem in einem Abstand von diesem aus dem oberen Bereich des Gefäßes (2) herausgeführten Abgasauslaß (6 bzw. 30 oder 31), einer in dem Gefäß (2) angeordneten, im wesentlichen vertikalen Trennwand (7; 21), die sich vom Deckel (8) des Gefäßes (2) nach unten erstreckt, in einem Abstand vom Gefäßboden (9) endet und den direkten Abgasweg vom Einlaß (4) zum Auslaß (6) derart unterbricht, daß ein siphonartiger Abgasweg mit einer Einlaßkammer (10; 26) und einer Auslaßkammer (11; 27) entsteht, sowie einer in der Gefäßaußenwand im Bereich der Auslaßkammer (11; 27) angeordneten Zugunterbrecherklappe (15; 32).

2. Wärmerückgewinnungseinrichtung nach Anspruch 1, d a d u r c h   g e k e n n z e i c h n e t , daß der Wärmeaustauscher (12) in der Einlaßkammer (10; 26) angeordnet ist.

3. Wärmerückgewinnungseinrichtung nach Anspruch 2, d a d u r c h   g e k e n n z e i c h n e t , daß der Wärmeaustauscher (12) aus haarnadelartig gebogenen Rohren (13) besteht, die sich von einem Sammelkammersystem (14) nach unten in die Einlaßkammer (10; 26) des topfartigen Gefäßes (2) erstrecken.

4. Wärmerückgewinnungseinrichtung nach einem der Ansprüche 1 bis 3, d a d u r c h   g e k e n n z e i c h n e t , daß im tiefsten Punkt des Bodens (9) des topfartigen Gefäßes (2) eine Öffnung (18) zum Auslaß von Kondensflüssigkeit vorgesehen ist.

5. Wärmerückgewinnungseinrichtung nach einem der Ansprüche 1 bis 4, d a d u r c h   g e k e n n z e i c h n e t , daß der Abgasauslaß (6) auf der dem Abgaseinlaß (4) gegenüberliegenden Seite des topfartigen Gefäßes (2) angeordnet ist.

6. Wärmerückgewinnungseinrichtung nach einem der Ansprüche 1 bis 5, d a d u r c h   g e k e n n z e i c h n e t , daß die Zugunterbrecherklappe (15) unterhalb des Abgasauslasses (6) angeordnet ist.

7. Wärmerückgewinnungseinrichtung nach einem der Ansprüche 1 bis 6, d a d u r c h   g e k e n n z e i c h n e t , daß die vertikale Trennwand (21) bogenartig oder in sonstiger Weise gewölbt ausgebildet ist, wobei die konkave Seite der Trennwand zur Einlaßkammer (26) gerichtet ist.

8. Wärmerückgewinnungseinrichtung nach Anspruch 7, d a d u r c h   g e k e n n z e i c h n e t , daß das topfartige Gefäß (2) im Bereich der Auslaßkammer (27) drei in Höhe der Einlaßöffnung (4) angeordnete, um den Umfang des Gefäßes (2) verteilte Auslaßöffnungen (6, 30, 31) aufweist, die wahlweise mit einem Deckel (33) verschließbar sind.

9. Wärmerückgewinnungseinrichtung nach Anspruch 8, d a d u r c h   g e k e n n z e i c h n e t , daß in den Auslaßöffnungen (30) wahlweise eine Zugunterbrecherklappe (32) installierbar ist.

10. Wärmerückgewinnungseinrichtung nach einem der Ansprüche 1 bis 9, d a d u r c h   g e k e n n z e i c h n e t , daß die Zugunterbrecherklappe (15; 32) um eine im wesentlichen horizontale Achse (16) schwenkbar ist und aufgrund eines einstellbaren Gegengewichtes (17) bei Stillstand des Brenners in geöffneter und bei Betrieb des Brenners in geschlossener Stellung steht.

0036565

Fig.1

Fig. 2

0036565

Fig.3

IV →   IV →

14   8   6
4
3   5
20
2   13   9

Fig. 4

33
31   29
13   2
24
3   5
22
6
4
23   27
25   21
26   28
20   30
32

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>US - A - 4 103 735</u> (WARNER)<br>* Spalte 2, Zeilen 1-50; Figuren 1,2 * | 1,5 |
| | -- | |
| | <u>FR - A - 2 397 612</u> (HAUGG)<br>* Seite 2, Zeile 16 - Seite 3, Zeile 7; Figuren 1,2 * | 1 |
| | -- | |
| | <u>GB - A - 682 886</u> (LUMMUS)<br>* Seite 2, Zeile 46 - Seite 3, Zeile 32; Figuren 1,3 * | 3,5,7 |
| | -- | |
| | <u>FR - A - 1 400 745</u> (HERGT)<br>* Seite 5, Absatz 2; Figur 2 * | 4 |
| | -- | |
| | <u>US - A - 1 783 821</u> (BARKER)<br>* Seite 2, Zeilen 18-54; Figuren 1,2 * | 10 |
| | -- | |
| | <u>FR - A - 853 327</u> (AMSTUTZ)<br>* Seite 1, Zeile 41 - Seite 2, Zeile 23; Figuren 1-4 * | 10 |
| | ---- | |

KLASSIFIKATION DER ANMELDUNG (Int. Cl.)

F 24 D   3/00
F 28 D  21/00
F 23 L  11/00
          11/02
F 24 D  11/00

RECHERCHIERTE SACHGEBIETE (Int. Cl.)

F 23 L
F 24 D
F 24 H
F 28 D

KATEGORIE DER GENANNTEN DOKUMENTE

X  von besonderer Bedeutung
A  technologischer Hintergrund
O  nichtschriftliche Offenbarung
P  Zwischenliteratur
T  der Erfindung zugrunde liegende Theorien oder Grundsätze
E  kollidierende Anmeldung
D  in der Anmeldung angeführtes Dokument
L  aus andern Gründen angeführtes Dokument
&  Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-06-1981 | WEIS |

EPA form 1503.1  06.78